# FASCICULE DE BREVET EUROPEEN

(11) **EP 0 791 562 B1**
(45) Date de publication et mention de la délivrance du brevet: **17.05.2000**
(21) Numéro de dépôt: 97400371.7
(22) Date de dépôt: 20.02.1997
(51) Int. Cl.: C03C 17/34, C03C 17/245

(54) **Substrat transparent muni d'un empilement de couches minces**
Mehrfach mit Dünnfilmen beschichtetes transparentes Substrat
Multilayered thin film-coated transparent substrate

(30) Priorité: 22.02.1996 FR 9602194
(43) Date de publication de la demande: 27.08.1997
(73) Titulaire: SAINT-GOBAIN VITRAGE, 92400 Courbevoie (FR)
(72) Inventeur: Anderson, Charles-Edward, 92400 Courbevoie (FR); Rousseau, Jean-Paul, 92100 Boulogne (FR)
(74) Mandataire: Renous Chan, Véronique

(56) Documents cités:
- EP-A- 0 499 287
- EP-A- 0 520 720
- EP-A- 0 521 602
- EP-A- 0 526 966
- EP-A- 0 745 569
- DE-A- 3 434 583
- DE-A- 4 100 820
- FR-A- 2 128 455
- US-A- 3 958 042

## Description

L'invention concerne les substrats transparents, notamment les substrats verriers, qui sont munis de revêtements composés d'une ou d'une pluralité de couche(s) mince(s) d'épaisseurs interférentielles et conçus afin de conférer à leurs substrats porteurs des propriétés spécifiques, par exemple des propriétés thermiques, optiques ou électriques.

L'invention concerne également l'utilisation de ces substrats revêtus, notamment pour réaliser des vitrages, ainsi que leur mode d'obtention.

Les revêtements évoqués précédemment sont donc constitués d'empilements de couches de composition chimique et de propriétés diverses. Il s'agit le plus souvent de couches de matériaux diélectriques, par exemple du type oxyde ou nitrure de métal ou de silicium, et/ou de couches conductrices, par exemple des couches de métal du type argent ou d'oxyde métallique dopé. Dans de nombreux cas, pour des raisons optiques, ces revêtements comportent des couches dont l'indice de réfraction doit être soigneusement sélectionné.

Il est ainsi connu un type de revêtement appelé anti-reflets, usuellement constitué d'une alternance de couches de matériaux diélectriques à haut et bas indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc s'accroître son ratio lumière transmise/lumière réfléchie, ce qui améliore la visibilité des objets placés derrière lui. On peut alors l'employer dans de nombreuses applications, par exemple pour protéger un tableau éclairé par une lumière placée derrière l'observateur, ou pour constituer ou faire partie d'une vitrine de magasin, afin de mieux distinguer ce qui se trouve dans la vitrine, même lorsque l'éclairage intérieur est faible par rapport à l'éclairage extérieur, ou encore dans du mobilier d'intérieur ou comme écran anti-éblouissement disposé devant les écrans d'ordinateur.

Les performances d'un revêtement anti-reflets peuvent être mesurées ou évaluées suivant différents critères. Viennent en premier, bien sûr, les critères optiques. On peut considérer qu'un « bon » revêtement anti-reflets doit pouvoir abaisser la réflexion lumineuse d'un substrat en verre clair standard jusqu'à une valeur donnée, par exemple 2%, voire 1% et moins. De même, il peut être important que ce revêtement conserve au substrat une colorimétrie satisfaisante notamment en réflexion, par exemple très neutre, très proche de celle du substrat nu. D'autres critères peuvent aussi être pris en compte suivant l'application envisagée, notamment la durabilité chimique et/ou mécanique du revêtement, le coût des matériaux utilisés, le temps de fabrication ou des techniques à employer pour le fabriquer.

Dans ce type d'empilement anti-reflets comme dans d'autres, il faut donc pouvoir fabriquer des couches de matériau à faible indice de réfraction, par exemple d'indice inférieur à 1,65.

Différents matériaux répondent actuellement à ce critère. On peut citer le fluorure de magnésium MgF₂, d'indice d'environ 1,38, que l'on peut déposer sous forme de couche mince par une technique du type évaporation sous vide. C'est une technique fiable pour des dépôts sur des surfaces petites, par exemple des surfaces de lunettes ou de lentilles, mais coûteuse et compliquée dès qu'il s'agit de dépôt sur des surfaces plus importantes, par exemple sur des vitrages.

On peut également mentionner l'oxyde de silicium SiO₂, d'indice de réfraction environ 1,45. Ce matériau peut être déposé à l'aide d'une technique de pulvérisation cathodique, technique tout-à-fait adaptée à des dépôt sur de grandes surfaces du type vitrage. Cependant, il n'est pas très facile de déposer du SiO₂ par pulvérisation réactive en présence d'oxygène. Outre le fait qu'il est nécessaire de doper la cible de silicium par un autre élément, notamment le bore ou l'aluminium, la vitesse de dépôt de la couche de SiO₂ par cette technique est peu élevée, et les conditions de dépôt sont parfois délicates à stabiliser et à maîtriser.

Le but de l'invention est alors de pallier ces inconvénients, en cherchant un nouveau type de matériau à bas indice de réfraction, que l'on puisse déposer sous forme d'une couche mince de haute qualité, de manière industrielle, avec un mode de fabrication satisfaisant, notamment en termes de coût, de facilité de mise en oeuvre et/ou de rendement.

L'invention a pour objet un substrat transparent tel qu'il est défini dans la revendication 1, notamment un substrat verrier, qui comporte sur au moins une de ses faces un revêtement de couche(s) mince(s), ledit revêtement comprend au moins une couche en un fluorure ou oxyfluorure d'aluminium Al_{X}O_{y}F_{z} (avec y ≥ o), comprenant éventuellement au moins un autre oxyde couche que l'on désignera par la suite conventionnellement, pour plus de commodités, sous le terme de « couche **A** », ladite couche A a un indice de réfraction inférieur à 1,63. Ce matériau présente en effet de multiples avantages, et tout d'abord sur le plan de son procédé de fabrication : le fluorure ou l'oxyfluorure d'aluminium peut en effet être déposé en couche mince par une technique sous vide du type pulvérisation cathodique, éventuellement assistée par champ magnétique.

Contrairement à une technique du type évaporation thermique, la technique de pulvérisation cathodique est très intéressante : elle permet de fabriquer des empilements complexes de couches minces en série, par dépôts successifs dans une même ligne de fabrication et s'adapte à des tailles de substrat très variables, notamment des grandes tailles ; elle est ainsi tout-à-fait indiquée pour fabriquer des revêtements pour des vitrages destinés au bâtiment ou à l'automobile.

Par ailleurs, la mise en oeuvre d'une telle technique pour déposer de l'oxyfluorure d'aluminium ne pose pas de problème : contrairement au dépôt d'oxyde de silicium où l'on a recours à une cible de silicium peu conductrice, qu'il faut doper, on peut utiliser ici une cible standard métallique en aluminium (on entend par cible « standard » une configuration géométrique de cible plane, par opposition à des cibles cylindriques en rotation, qui peuvent évidemment aussi être utilisées). On effectue alors le dépôt de la couche **A** en atmosphère réactive comprenant un gaz oxydant comme l'oxygène et un gaz fluoré, sous une alimentation électrique standard en courant continu. Les dépôts ainsi réalisés sont tout-à-fait reproductibles et aisés à contrôler. En outre, la vitesse de dépôt d'une telle couche est nettement plus élevée que celle d'une couche de SiO₂ déposée par pulvérisation, et suffisamment grande pour la rendre parfaitement compatible avec les exigences de temps de fabrication réduits imposées par la fabrication de revêtement en grande série, pour des vitrages tout particulièrement.

Par ailleurs, la couche **A** ainsi fabriquée, d'une grande qualité, est aussi avantageuse sur le plan de ses propriétés optiques : l'oxyde d'aluminium pur Al₂O₃ a un indice de réfraction d'environ 1,65. En introduisant du fluor pour obtenir un oxyfluorure ou même en substituant complètement l'oxygène par le fluor pour obtenir un fluorure, on peut abaisser de manière contrôlée l'indice de la couche, plus la teneur en fluor de la couche est importante et plus son indice de réfraction est faible. En adaptant les conditions de dépôt, et notamment en modulant le taux de gaz fluoré par rapport au gaz oxydant dans l'atmosphère de dépôt par pulvérisation cathodique, on arrive à obtenir une couche **A** à taux de fluor variable, jusqu'à la saturation complète en fluor en l'absence de gaz oxydant, couche dont on peut régler très précisément l'indice dans une large gamme de valeurs. L'indice de la couche **A** est ainsi choisi inférieur à 1,63, et est de préférence choisi entre 1,60 et 1,32 notamment entre 1,35 et 1,45. Cette souplesse quant au choix de l'indice de réfraction rend la couche **A** très intéressante, car adaptable en fonction du rôle optique qu'on veut lui faire jouer au sein d'un empilement de couches minces donné. Dans la formule AlₓO_{y}F_{z}, on a la relation : 3x = 2 y + z, sachant que « y » peut être supérieur ou égal à zéro.

Le taux de fluor dans la couche **A** peut ainsi être avantageusement choisi de façon à ce que le ratio atomique F/AI dans la couche soit compris entre 0,1 et 3,0, notamment entre 0,10 et 2,50, de préférence entre 0,16 et 2,45. De même, on peut ajuster le ratio atomique O/F de façon à ce qu'il soit compris entre 0 et 10, notamment entre 0,1 et 10, de préférence entre 0,15 et 9 .

Diverses considérations peuvent par ailleurs amener à introduire dans la couche **A** d'autres éléments que de l'oxygène, du fluor et de l'aluminium. Il peut s'agir notamment d'un oxyde ou d'un mélange d'oxydes, de préférence appartenant au groupe suivant : oxyde de silicium SiO₂, oxyde d'étain SnO₂, oxyde de nickel NiO.

Tous ces oxydes ayant un indice d'au plus 1,9, leur ajout dans la couche peut être un moyen supplémentaire d'ajuster l'indice de la couche, en fonction de sa teneur en fluor, sans l'augmenter dans des proportions indésirables. En outre, ils peuvent avoir une bonne influence sur la durabilité mécanique ou chimique de la couche, ce qui peut s'avérer important quand la couche **A** se trouve être la couche la plus extérieure de l'empilement de couches dont elle fait partie, et donc, de fait, quand elle peut se trouver directement exposée à des agressions du type abrasion mécanique, exposition à des produits chimiques corrosifs ou conditions climatiques peu favorables.

Ainsi, une faible teneur en oxyde de silicium apporte une amélioration de la durabilité chimique de la couche **A**, notamment une augmentation de sa résistance à l'humidité. Avantageusement, la couche **A** comprend un mélange de fluorure ou d'oxyfluorure d'aluminium/oxyde de silicium. Dans ce cas, on choisit de préférence un ratio atomique Si/AI compris entre 0,05 et 1,00, de préférence entre 0,06 et 0,10 ; un ratio atomique O/F compris entre 0,2 et 10, et de préférence entre 0,25 et 8,70, et un ratio atomique F/AI compris entre 0,1 et 2,5, de préférence entre 0,18 et 2,40.

Selon un premier mode de réalisation non limitatif, la couche **A** fait partie d'un empilement de couches minces à propriétés de réflexion dans l'infrarouge et/ou dans le domaine du rayonnement solaire, notamment des empilements comprenant au moins une couche métallique du type argent disposée entre deux revêtements de matériau diélectrique. Vu son indice de réfraction peu élevé, elle est notamment particulièrement adaptée pour jouer le rôle de couche intermédiaire à indice inférieur à celui du substrat, disposée entre substrat et empilement, comme décrit dans le brevet EP-0 745 569.

Selon un autre mode de réalisation non limitatif de l'invention, la couche **A** fait partie d'un revêtement anti-reflets, comportant une alternance de couches de matériaux diélectriques à haut et bas indices de réfraction, au moins une des couches à bas indice de l'empilement étant constituée d'une couche **A**. Cela peut être la dernière couche du revêtement anti-reflets, ou encore l'ensemble des couches à bas indice de celui-ci.

Dans le contexte de l'invention, on comprend par « bas indice » des indices de réfraction compris entre 1,65 et 1,32, notamment inférieurs à 1,60, et par « haut indice » des indices de réfraction d'au moins 1,80, notamment compris entre 1,9 et 2,45.

L'utilisation de couches de type **A** en tant que couche à bas indice dans un revêtement anti-reflets est en effet tout-à-fait avantageuse : elle peut se substituer aux couches de silice usuellement utilisées dans ce type de revêtement. On peut alors faire deux choix différents : soit la couche **A** a un taux de fluor sélectionné de manière à ce qu'elle ait un indice proche de celui de la silice, c'est-à-dire proche de 1,45. Dans ce cas, on a « remplacé » un matériau par un autre matériau plus facile à déposer par pulvérisation cathodique, mais optiquement équivalent dans l'empilement anti-reflets. Soit la couche **A** est choisie telle qu'elle ait un indice sensiblement plus faible que celui de la silice, notamment inférieur à 1,40, par exemple de l'ordre de 1,37 à 1,38. Dans ce cas, elle autorise un choix plus vaste de matériaux à haut indice possibles. En effet, si l'on schématise beaucoup la façon d'évaluer la performance d'un revêtement anti-reflets, on peut dire que la capacité d'un tel revêtement à abaisser la valeur de réflexion lumineuse du substrat porteur est corrélée à la différence entre les indices de réfraction des couches à haut et bas indices qui constituent l'empilement, et plus particulièrement à la différence entre les indices des deux dernières couches à haut et bas indice de celui-ci. Jusque là, il était usuel d'associer à une couche à bas indice en silice une couche à haut indice du type oxyde de titane, c'est-à-dire ayant un indice d'au moins 2,25. A partir du moment où l'on préfère à la silice un matériau d'indice plus faible, on peut s'autoriser à utiliser en tant que couche à haut indice des couches de matériau d'indice relativement moins élevé, par exemple simplement d'au moins 1,9 à 2,2, sans sacrifier les performances optiques du revêtement anti-reflets.

Ainsi, le revêtement anti-reflets qui inclut au moins une couche du type **A** en tant que couche à bas indice peut utiliser des couches haut indice, d'indice effectivement très élevé, d'au moins 2,25 comme l'oxyde de niobium Nb₂O₅, l'oxyde de zirconium ZrO₂, l'oxyde de titane TiO₂, l'oxyde de bismuth Bi₂O₃ ou l'oxyde de cérium CeO₂. Mais il peut tout autant avoir recours à des couches à haut indice d'indice un peu moins élevé, notamment de l'ordre de 1,90 à 2,20 comme l'oxyde de tungstène WO₃, l'oxyde d'étain SnO₂, l'oxyde de zinc ZnO, le nitrure d'aluminium AIN, le nitrure de silicium Si₃N₄ ou l'oxyde de tantale Ta₂O₅. Même avec ce type de matériau, on peut conserver en effet une différence d'indices de réfraction entre couches à haut et bas indices d'au moins 0,5, notamment d'environ 0,8. Et il peut être intéressant industriellement d'utiliser par exemple du WO₃ ou du SnO₂ plutôt que du Nb₂O₅ ou TiO₂ en tant que couche à haut indice, notamment parce que les premières couches présentent une vitesse de dépôt par pulvérisation cathodique nettement supérieure aux secondes.

En outre, l'utilisation dans des empilements anti-reflets de couches **A** ayant un indice plus faible que la silice présente deux avantages supplémentaires sur le plan optique, et plus particulièrement sur l'aspect colorimétrique en réflexion : la couleur en réflexion résiduelle du substrat revêtu est rendue plus neutre, et les variations de couleur en fonction de l'angle d'incidence avec lequel le substrat revêtu est observé se sont révélées plus ténues.

Un revêtement anti-reflets selon l'invention, comprenant au moins une couche **A**, peut comprendre seulement deux séquences successives de couches à haut et bas indices. Quatre couches peuvent en effet suffire pour obtenir un effet anti-reflet remarquable.

Des exemples de revêtement anti-reflets ayant cette configuration peuvent ainsi être des empilements du type :
SnO₂/SiO₂/Nb₂O₅/couche **A**
ou
SnO₂/couche A/Nb₂O₅/couche **A**

Les couches de Nb₂O₅ peuvent être aussi avantageusement remplacées par des couches de SnO₂, WO₃, Bi₂O₃ ou TiO₂.

Selon une autre configuration, l'empilement anti-reflets peut comprendre non pas deux séquences de couches à haut et bas indices, mais trois. L'effet anti-reflets peut alors être encore plus important et associé à une couleur résiduelle en réflexion plus neutre, mais la fabrication de l'empilement un peu plus longue et coûteuse.

Selon une autre configuration, on substitue à la première séquence de couches à haut et bas indices du revêtement anti-reflets (on désigne par « première séquence » celle la plus proche de la surface du substrat porteur), une couche seule présentant un indice de réfraction intermédiaire, compris entre 1,65 et 1,80. Une telle couche à indice intermédiaire a un effet optique similaire à celui d'une séquence couche à haut indice/couche à bas indice et présente l'avantage de diminuer le nombre global de couches de l'empilement.

Selon une autre configuration encore, au moins une des couches dites à haut indice de l'empilement anti-reflets, et notamment la couche de la seconde séquence, peut être une couche « globale », à haut indice ; le terme de « globale » signifiant qu'il s'agit en fait d'une superposition de couches à haut indice, notamment deux ou trois. Optiquement cette couche « globale » joue, schématiquement, le rôle d'une couche unique dont l'indice serait intermédiaire entre les indices de réfraction des différentes couches qui la composent.

On peut ainsi avoir des empilements du type :
verre/SnO₂/couche **A**/Bi₂O₃/SnO₂/Bi₂O₃/couche **A**
ou
verre/SnO₂/couche **A**/Nb₂O₅/SnO₂/couche **A**

On peut conférer à l'empilement anti-reflets une fonction additionnelle antistatique en incorporant dans l'empilement une couche en un matériau conducteur, notamment un matériau du type oxyde métallique dopé tel que l'oxyde d'indium dopé à l'étain ITO.

De préférence, chacune des faces du substrat est recouverte d'un tel empilement anti-reflets, afin d'obtenir l'effet anti-reflets maximal.

Avec les empilements anti-reflets précédemment décrits, on parvient à abaisser les valeurs de réflexion lumineuse R_{L} des substrats à des valeurs d'au plus 2%, notamment d'au plus 1% voire d'au plus 0,5%. On obtient ainsi un aspect colorimétrique en réflexion esthétique et agréable, notamment des teintes peu intenses dans les bleus ou bleu-vert, ce qui se traduit dans le système de colorimétrie (L*, a*, b*) par des valeurs de a* et b* négatives, d'au plus 3,5 en valeur absolue pour a* et d'au plus 1,5 en valeur absolue pour b*.

L'invention a également pour objet des revêtements comprenant, outre au moins une couche de type **A**, au moins une couche à propriétés thermiques données, notamment à propriété anti-solaire ou à bas-émissivité, du type métal tel que l'argent ou l'aluminium ou du type oxyde métallique dopé du type oxyde d'étain dopé au fluor SnO₂:F ou oxyde d'indium dopé à l'étain ITO.

L'invention a aussi pour objet les vitrages incorporant les substrats revêtus, qu'ils soient monolithiques, feuilletés, ou multiples à lame(s) de gaz intercalaire(s).

Ces vitrages peuvent être utilisés aussi bien en tant que vitrages intérieurs ou extérieurs de bâtiment qu'en tant que verre de protection d'objet du type tableau, vitrine, mobilier verrier comme un comptoir ou une vitrine réfrigérée..., qu'en tant que vitrages automobiles du type pare-brise feuilleté, miroirs, écrans anti-éblouissement pour ordinateurs, verre décoratif.

L'invention a également pour objet le procédé de fabrication des substrats transparents, notamment verriers à revêtements contenant des couches **A**. Un procédé consiste à déposer l'ensemble des couches, successivement les unes après les autres, par une technique sous vide, notamment par pulvérisation cathodique assistée par champ magnétique. Ainsi, on peut déposer les couches d'oxyde par pulvérisation réactive du métal en question en présence d'oxygène, les couches de nitrure en présence d'azote, et les couches **A** par pulvérisation réactive à partir d'une cible contenant de l'aluminium en présence de gaz fluoré, pour obtenir un fluorure, et en présence de gaz fluoré et de gaz oxydant du type oxygène pour obtenir un oxyfluorure.

Il n'est cependant pas exclu qu'une partie des couches de l'empilement à part les couches **A** soit déposée par une autre technique utilisant le vide, ou par une technique du type pyrolyse, notamment la première couche de l'empilement (ou les deux premières) directement au contact du substrat porteur quand ce dernier est en verre.

L'invention n'est pas limitative quant à la nature du substrat porteur transparent, qui peut donc être soit en verre, soit en matériau plastique.

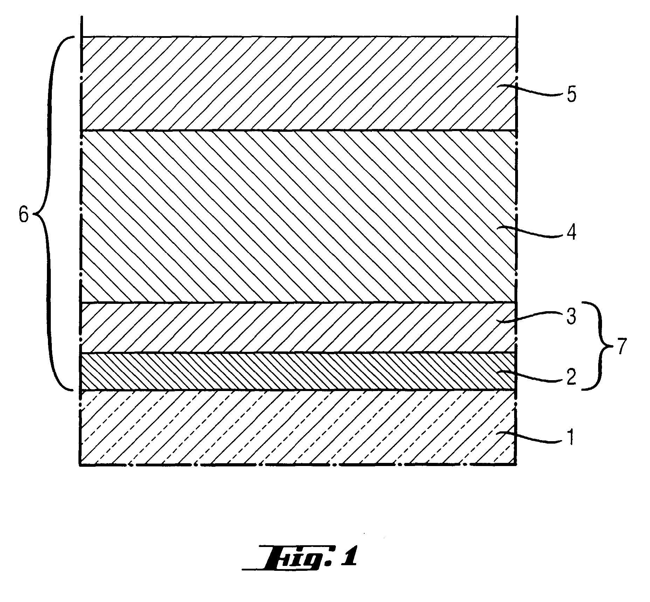

Les détails et caractéristiques avantageuses de l'invention vont maintenant ressortir des exemples suivants non limitatifs, à l'aide de la figure 1.

Cette figure, très schématique, représente en coupe un substrat surmonté d'un empilement anti-reflets utilisant au moins une couche **A** selon l'invention (les proportions entre l'épaisseur du substrat et celles des couches n'ont pas été respectées pour en faciliter la lecture). En fait, chacune des faces du substrat est munie d'un empilement identique, mais un seul empilement a été représenté pour plus de clarté. L'utilisation d'un revêtement sur chacune des faces du substrat a été effectué sur l'ensemble des exemples qui suivent.

On précise que dans ces exemples, les dépôts successifs de couches minces se font par pulvérisation cathodique réactive assistée par champ magnétique.

Les substrats sur lesquels sont déposés les revêtements anti-reflets sont des substrats de verre silico-sodo-calcique clair du type Planilux commercialisé par SAINT-GOBAIN VITRAGE, de 3 à 6 mm d'épaisseur, notamment 4 mm.

La figure 1 représentant le substrat de verre 1 qui est revêtu, selon un premier mode de réalisation, sur ses deux faces d'un empilement 6 quadri-couche comportant une alternance de couches minces 2,4 à haut indice et de couches minces 3,5 à bas indice.

**→** Une première série d'exemples a été réalisée avec de l'oxyde de niobium en couche 4 et de l'oxyde d'étain en couche 2 en tant que couches à haut indice :

### EXEMPLE 1

Cet exemple utilise un revêtement quadri-couche composé de la séquence suivante (sous chacune des couches sont indiquées leurs épaisseurs géométriques en nanomètres) : 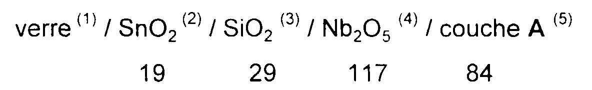
□ On obtient les couches 2, 3 et 4 à partir de cibles respectivement en étain, silicium dopé et niobium en présence d'oxygène,
□ On obtient la couche **A** de formule AlₓO_{y}F_{z} à partir d'une cible d'aluminium, en présence d'oxygène et de CF₄ (d'autres gaz fluorés peuvent être utilisés en combinaison ou à la place de CF₄, par exemple C₂F₆). On règle la teneur en CF₄ pour obtenir une couche d'indice de réfraction d'environ 1,37. La réflexion lumineuse R_{L} selon l'illuminant D₆₅ mesurée sur le substrat revêtu est de 0,80%. Les valeurs de a*_{(R)} et b*_{(R)} en réflexion selon le système de colorimétrie (L*, a*, b*) sont respectivement d'environ -3 et -1. La vitesse de dépôt de la couche **A** est nettement supérieure à celle de la couche 3 en silice.

### EXEMPLE 2

Cet exemple utilise un revêtement quadri-couche utilisant cette fois deux couches **A**, selon la séquence suivante (mêmes conventions, ainsi que dans tous les exemples qui suivent, pour l'indication des épaisseurs géométriques et des valeurs photométriques) : 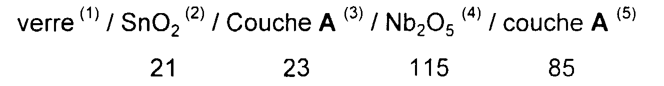
□ On obtient ces couches comme à l'exemple précédent, les couches **A** ont un indice d'environ 1,37. Le substrat revêtu présente une valeur de R_{L} de 0,96%, et des valeurs de a* et b* de respectivement environ -3 et -1.

### EXEMPLE 3

On utilise un empilement similaire à l'exemple 2, mais la couche **A** « extérieure » numérotée 5 sur la figure est cette fois déposée dans des conditions conduisant à un indice de réfraction d'environ 1,42, l'autre couche **A** restant d'indice environ 1,37.
□ On obtient la couche **A** d'indice 1,37 comme précédemment, couche répondant donc à la formule AlₓO_{y}F_{z}.
□ On obtient la couche **A** d'indice 1,42 en utilisant une cible qui n'est plus en aluminium pur, mais en alliage aluminium-silicium avec une faible teneur en silicium. Cette couche répond donc à la formule AlₓO_{y}F_{z}Siₜ. La séquence est la suivante : 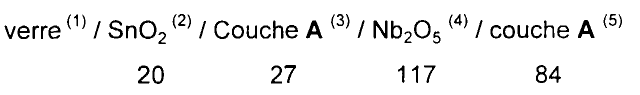
□ Le substrat revêtu présente une valeur de R_{L} de 0,80%, et des valeurs de a* et b* respectivement d'environ -3 et -1.

**→** Une seconde série d'exemple a été réalisée avec de l'oxyde de tungstène en couche 4 et de l'oxyde d'étain en couche 2 : on fabrique les couches comme précédemment, l'oxyde de tungstène étant déposé par pulvérisation réactive d'une cible de tungstène métallique en présence d'oxygène.

### EXEMPLE 4

On utilise un empilement selon la séquence suivante : 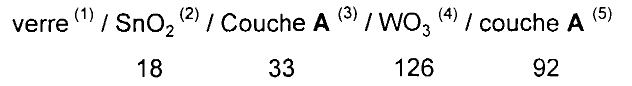 □ La première couche **A**⁽³⁾ a un indice d'environ 1,37, et la seconde d'environ 1,42. Elles sont obtenues comme à l'exemple 3. Le substrat revêtu présente une valeur de R_{L} d'environ 0,33%, avec des valeurs de a* et b* en réflexion respectivement d'environ -3 et -1.

### EXEMPLE 5

On utilise un empilement selon la séquence suivante : 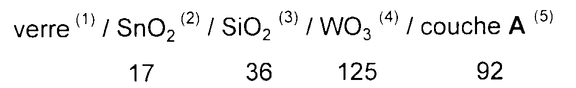 □ La couche **A** a un indice d'environ 1,42, obtenue comme à l'exemple 3 à partir d'une cible d'alliage métallique Al/Si. Le substrat revêtu présente une valeur de R_{L} d'environ 0,35%, et des valeurs de a* et b* respectivement d'environ -3 et -1.

**→** Un exemple a été réalisé avec de l'oxyde de titane en tant que couche 4 et de l'oxyde d'étain en tant que couche 2 :

### EXEMPLE 6

On utilise un empilement selon la séquence suivante : 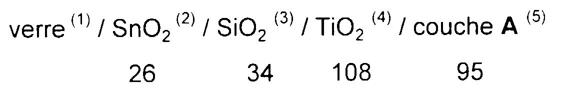 □ La couche **A** est ici d'indice 1,37, obtenue comme à l'exemple 1. Le substrat revêtu présente une valeur de R_{L} d'environ 0,90%, et des valeurs de a* et b* toujours respectivement d'environ -3 et -1.

Selon un second mode de réalisation, le revêtement anti-reflet contenant au moins une couche **A** selon l'invention est conçu de manière à ce que la couche 4 d'oxyde à haut indice soit en fait une couche « globale » constituée de la superposition de deux ou trois couches d'oxyde à haut indice.

### EXEMPLE 7

On utilise un empilement à 5 couches selon la séquence suivante : 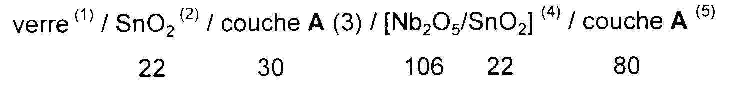
□ La première couche **A**⁽³⁾ a un indice d'environ 1,37 et la seconde couches **A** ⁽⁵⁾ a un indice d'environ 1,42. Elles sont obtenues comme à l'exemple 3.
□ Le substrat revêtu présente une valeur de R_{L} d'environ 0,50% et des valeurs de a* et b* en réflexion respectivement d'environ -3 et -1.
□ On peut aussi substituer à la couche de Nb₂O₅ de cet empilement une couche en TiO₂ ou Bi₂O₃, notamment.

### EXEMPLE 8

On utilise un empilement à 6 couches selon la séquence suivante : 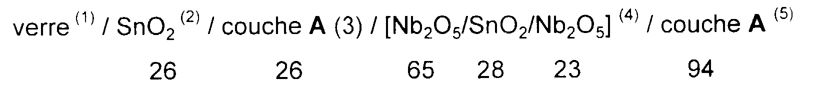
□ Les deux couches **A** ⁽³⁾ et ⁽⁵⁾ sont d'indice 1,37 obtenues comme à l'exemple 4.
□ Le substrat revêtu présente une valeur de R_{L} d'environ 0,52% et des valeurs de a* et b* en réflexion respectivement d'environ -3,1 et -1,2.
□ Là encore, on peut substituer à la séquence [Nb₂O₅/SnO₂/Nb₂O₅] la séquence [Bi₂O₃/SnB₂/Bi₂O₃] ou [TiO₂/SnO₂/TiO₂].

**→** En dernier lieu, on procède à la réalisation d'exemples comparatifs utilisant des revêtements anti-reflets utilisant exclusivement des couches en SiO₂ en tant que couche à bas indice.

**→** Un dernier exemple selon l'invention a été réalisé, avec un revêtement anti-reflets où la première séquence de couches (2, 3) à haut et bas indices est remplacée par une couche (7) d'indice intermédiaire :

### EXEMPLE 9

On utilise un empilement à trois couches selon la séquence suivante : 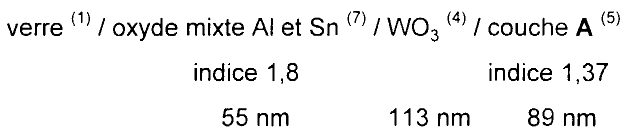
□ La couche ⁽⁷⁾ d'oxyde mixte est obtenue par pulvérisation réactive en présence d'oxygène à partir d'une cible en Al/Sn. La couche **A** ⁽⁵⁾ est obtenue comme à l'exemple 4.
□ Le substrat revêtu présente une valeur de R_{L} de 0,66%, et des valeurs de a* et b* en réflexion de respectivement -3,1 et -1,1.

### EXEMPLE 10 COMPARATIF

II est à rapprocher de l'exemple 1, puisqu'il utilise la même séquence, en remplaçant la couche 5 par une couche de silice. On a donc l'empilement suivant : 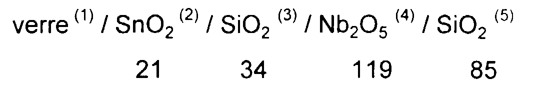 □ La valeur de R_{L} du substrat revêtu est de 0,55%.

De l'ensemble de ces résultats, on peut tirer les conclusions suivantes : l'incorporation de couches de type **A** dans des empilements anti-reflets est avantageux : on peut diminuer très sensiblement le temps de cycle de production, en ayant recours à ces couches fluorées plutôt qu'à des couches en silice.

Cette substitution ne s'accompagne d'aucun inconvénient sur le plan des propriétés de l'empilement, tout particulièrement optiques : les couches **A**, d'indice modulable, permettent l'obtention de valeurs de R_{L} très faibles, au moins aussi faibles qu'avec des couches de silice. Elles permettent en outre d'obtenir un aspect vert-bleuté très pâle en réflexion, teinte tout-à-fait recherchée actuellement.

Les épaisseurs de chacune des couches ont été effectivement sélectionnées, et tout particulièrement les épaisseurs des couches **A**, afin d'obtenir cette colorimétrie conjointement à une faible valeur de réflexion lumineuse. Il va de soi que l'on reste dans le cadre de l'invention en modifiant les épaisseurs de ces couches, notamment de ± 20% par rapport aux épaisseurs indiquées, notamment dans le but d'obtenir une colorimétrie en réflexion un peu différente.

En outre, utiliser, comme dans l'exemple 3, une couche **A** « extérieure » en alumine fluorée contenant en outre un peu de silice apporte deux avantages : cela permet de jouer plus finement sur l'indice de la couche, et cela augmente la résistance chimique de la couche par rapport à une couche constituée que par de la silice ou que par de l'alumine fluorée.

Cela est intéressant quand le substrat est susceptible d'être incorporé dans des vitrages, avec l'empilement de couches tourné vers l'extérieur (agressions climatiques) ou intérieur (agression par nettoyage abrasif).

Un test a d'ailleurs démontré une bonne durabilité mécanique :
□ on a déposé directement sur un substrat verrier une couche **A** selon l'invention d'indice 1,42, constituée d'un mélange d'oxyfluorure d'aluminium et de silice et de 100 nm d'épaisseur. On a fait subir à ce substrat le test abrasion dit Taber, test effectué à l'aide de meules faites de poudre abrasive noyée dans un élastomère. La machine est fabriquée par la société TABER INSTRUMENT CORPORATION aux Etats-Unis. Il s'agit du modèle 174, « Standard Abrasion Tester », les meules sont de type CS10F chargées de 500 grammes. La transmission lumineuse T_{L} selon l'illuminant D₆₅ et le niveau de flou F (transmission lumineuse diffuse) ont été mesurés au départ, puis après 150, 350 et 650 tours. Le résultat figure dans le tableau ci-dessous :

| **Nombre de tours** | **TL (%)** | **F (%)** |
|---|---|---|
| O | 92,2 | 1,32 |
| 150 | 92,4 | 2,18 |
| 350 | 93,6 | 2,74 |
| 650 | 91,6 | 2,68 |

□ On constate effectivement que les variations de T_{L} et de flou F sont faibles.

## Revendications (Revendications pour l'(les) Etat(s) contractant(s) suivant(s): AT, BE, CH, DE, ES, FR, GB, IT, LI, LU, NL)

1. Substrat transparent (1), notamment substrat verrier, comportant sur au moins une de ses faces un revêtement (6) de couche(s) mince(s), **caractérisé en ce que** ledit revêtement comprend au moins une couche **A** en fluorure ou oxyfluorure d'aluminium AlₓO_{y}F_{z}., avec y ≥ 0, comprenant éventuellement au moins un autre oxyde, et **en ce que** la couche **A** a un indice de réfraction inférieur à 1,63, notamment compris entre 1,60 et 1,32, de préférence entre 1,45 et 1,35, à l'exception des revêtements de couches minces où la couche **A** est en contact direct avec le substrat.

2. Substrat selon la revendication 1, **caractérisé en ce que** le ratio atomique F/AI de la couche **A** est compris entre 0,10 et 3, notamment entre 0,10 et 2,50 de préférence entre 0,16 et 2,45 .

3. Substrat (1) selon l'une des revendication 1 à 2, **caractérisé en ce que** le ratio atomique O/F de la couche **A** est compris entre 0 et 10, notamment entre 0,1 et 10, de préférence entre 0,15 et 9.

4. Substrat (1) selon la revendication 1, **caractérisé en ce que** la couche **A** comprend, outre l'oxyfluorure d'aluminium, au moins un autre oxyde ou un mélange d'oxydes appartenant au groupe suivant : oxyde de silicium SiO₂, oxyde d'étain SnO₂, oxyde de nickel NiO.

5. Substrat (1) selon la revendication 4, **caractérisé en ce que** la couche **A** comprend un mélange de fluorure ou d'oxyfluorure d'aluminium et d'oxyde de silicium, avec notamment un ratio atomique Si/AI compris entre 0,05 et 1,00, de préférence entre 0,06 et 0,10, un ratio atomique O/F compris entre 0,2 et 10, de préférence entre 0,25 et 8,70 et un ratio atomique F/AI compris entre 0,1 et 2,5, de préférence entre 0,18 et 2,40 .

6. Substrat (1) selon l'une des revendications précédentes, **caractérisé en ce que** la couche **A** est déposée par une technique de pulvérisation cathodique, notamment de pulvérisation cathodique réactive en présence d'oxygène et de gaz fluoré quand elle comprend un oxyfluorure d'aluminium, et notamment en pulvérisation cathodique réactive en présence de gaz fluoré quand elle comprend un fluorure d'aluminium.

7. Substrat (1) selon l'une des revendications précédentes, **caractérisé en ce que** le revêtement (6) est un revêtement anti-reflets, comportant une alternance de couches de matériaux diélectriques à haut (2, 4) et bas (3, 5) indices de réfraction, au moins une des couches (3, 5) à bas indice de réfraction étant constituée par une couche **A**.

8. Substrat (1) selon la revendication 7, **caractérisé en ce que** la dernière couche (5) du revêtement anti-reflets (6) est une couche **A**.

9. Substrat (1) selon la revendication 7 ou 8, **caractérisé en ce que** l'ensemble des couches (3, 5) à bas indice du revêtement (6) anti-reflets sont des couches **A**.

10. Substrat (1) selon l'une des revendications 7 à 9, **caractérisé en ce que** les couches (2, 4) à haut indice de réfraction ont un indice d'au moins 1,80, notamment un indice entre 1,90 et 2,20 comme l'oxyde de tungstène WO₃, l'oxyde d'étain SnO₂, l'oxyde de zinc ZnO, le nitrure d'aluminium AIN, le nitrure de silicium Si₃N₄, l'oxyde de tantale Ta₂O₅, ou un indice d'au moins 2,25 comme l'oxyde de niobium Nb₂O₅, l'oxyde de titane TiO₂, l'oxyde de bismuth Bi₂O₃, l'oxyde de zirconium ZrO₂, l'oxyde de cérium CeO₂.

11. Substrat (1) selon l'une des revendications 7 à 10, **caractérisé en ce que** la différence d'indice de réfraction entre deux couches adjacentes à haut et bas indices de réfraction, notamment entre les deux dernières couches est d'au moins 0,5, notamment d'environ 0,8.

12. Substrat (1) selon l'une des revendications 7 à 11, **caractérisé en ce que** le revêtement (6) anti-reflets comporte l'empilement :
SnO₂ / SiO₂ / Nb₂O₅ (ou SnO₂ ou WO₃ ou Bi₂O₃ ou TiO₂) / couche **A** ou
SnO₂ / couche **A** / Nb₂O₅ (ou SnO₂ ou WO₃ ou Bi₂O₃ ou TiO₂) / couche **A**

13. Substrat (1) selon l'une des revendications 7 à 11, **caractérisé en ce qu'**à la première séquence de couches à haut et bas indices (2, 3) se substitue une couche (7) seule présentant un indice de réfraction intermédiaire compris entre 1,65 et 1,80.

14. Substrat (1) selon l'une des revendications 7 à 11 ou 13, **caractérisé en ce que** la seconde séquence (4, 5) de couches à haut et bas indices de réfraction comprend une couche (4) " globale " à haut indice composée d'une superposition de couches à haut indice, notamment deux ou trois, avec notamment au moins une couche en oxyde de niobium, de bismuth ou de tungstène.

15. Substrat selon l'une des revendications 7 à 14, **caractérisé en ce que** le revêtement (6) anti-reflets est également anti-statique, avec une couche en un matériau conducteur du type oxyde métallique dopé tel que l'oxyde d'indium dopé à l'étain ITO.

16. Substrat (1) selon l'une des revendications 7 à 14, **caractérisé en ce qu'**il comporte un revêtement (6) anti-reflets sur chacune de ses faces.

17. Substrat (1) selon l'une des revendications 7 à 16, **caractérisé en ce qu'**il présente une réflexion lumineuse R_{L} d'au plus 2%, notamment d'au plus 1% voire d'au plus 0,6% et une couleur bleue ou bleu-vert en réflexion, avec notamment des valeurs de a* négatives d'au plus 3,5 en valeurs absolues et des valeurs de b* négatives et d'au plus 1,5 en valeurs absolues.

18. Substrat (1) selon l'une des revendications 1 à 6, **caractérisé en ce que** le revêtement comprend une couche à propriétés thermiques, notamment une couche bas-émissive du type argent ou aluminium, ou oxyde métallique dopé du type SnO₂:F ou oxyde d'indium dopé à l'étain ITO.

19. Vitrage monolithique, feuilleté ou multiple à lame(s) de gaz intercalaire(s), **caractérisé en ce qu'**il incorpore le substrat selon l'une des revendications précédentes.

20. Application du substrat selon l'une des revendications 1 à 18 ou du vitrage selon la revendication 19 à la réalisation de vitrages intérieurs ou extérieurs de bâtiments, vitrages automobile, vitrages de protection d'objet du type tableaux, vitrines ou comptoirs, écrans anti-éblouissement pour ordinateurs, miroirs.

## Revendications (Revendications pour l'(les) Etat(s) contractant(s) suivant(s): SE)

1. Substrat transparent (1), notamment substrat verrier, comportant sur au moins une de ses faces un revêtement (6) de couche(s) mince(s), **caractérisé en ce que** ledit revêtement comprend au moins une couche **A** en fluorure ou oxyfluorure d'aluminium AlₓO_{y}F_{z}., avec y ≥ 0, comprenant éventuellement au moins un autre oxyde, et **en ce que** la couche **A** a un indice de réfraction inférieur à 1,63, notamment compris entre 1,60 et 1,32, de préférence entre 1,45 et 1,35.

2. Substrat selon la revendication 1, **caractérisé en ce que** le ratio atomique F/AI de la couche **A** est compris entre 0,10 et 3, notamment entre 0,10 et 2,50 de préférence entre 0,16 et 2,45 .

3. Substrat (1) selon l'une des revendication 1 à 2, **caractérisé en ce que** le ratio atomique O/F de la couche **A** est compris entre 0 et 10, notamment entre 0,1 et 10, de préférence entre 0,15 et 9.

4. Substrat (1) selon la revendication 1, **caractérisé en ce que** la couche **A** comprend, outre l'oxyfluorure d'aluminium, au moins un autre oxyde ou un mélange d'oxydes appartenant au groupe suivant : oxyde de silicium SiO₂, oxyde d'étain SnO₂, oxyde de nickel NiO.

5. Substrat (1) selon la revendication 4, **caractérisé en ce que** la couche **A** comprend un mélange de fluorure ou d'oxyfluorure d'aluminium et d'oxyde de silicium, avec notamment un ratio atomique Si/Al compris entre 0,05 et 1,00, de préférence entre 0,06 et 0,10, un ratio atomique O/F compris entre 0,2 et 10, de préférence entre 0,25 et 8,70 et un ratio atomique F/AI compris entre 0,1 et 2,5, de préférence entre 0,18 et 2,40 .

6. Substrat (1) selon l'une des revendications précédentes, **caractérisé en ce que** la couche **A** est déposée par une technique de pulvérisation cathodique, notamment de pulvérisation cathodique réactive en présence d'oxygène et de gaz fluoré quand elle comprend un oxyfluorure d'aluminium, et notamment en pulvérisation cathodique réactive en présence de gaz fluoré quand elle comprend un fluorure d'aluminium.

7. Substrat (1) selon l'une des revendications précédentes, **caractérisé en ce que** le revêtement (6) est un revêtement anti-reflets, comportant une alternance de couches de matériaux diélectriques à haut (2, 4) et bas (3, 5) indices de réfraction, au moins une des couches (3, 5) à bas indice de réfraction étant constituée par une couche **A**.

8. Substrat (1) selon la revendication 7, **caractérisé en ce que** la dernière couche (5) du revêtement anti-reflets (6) est une couche **A**.

9. Substrat (1) selon la revendication 7 ou 8, **caractérisé en ce que** l'ensemble des couches (3, 5) à bas indice du revêtement (6) anti-reflets sont des couches **A**.

10. Substrat (1) selon l'une des revendications 7 à 9, **caractérisé en ce que** les couches (2, 4) à haut indice de réfraction ont un indice d'au moins 1,80, notamment un indice entre 1,90 et 2,20 comme l'oxyde de tungstène WO₃, l'oxyde d'étain SnO₂, l'oxyde de zinc ZnO, le nitrure d'aluminium AIN, le nitrure de silicium Si₃N₄, l'oxyde de tantale Ta₂O₅, ou un indice d'au moins 2,25 comme l'oxyde de niobium Nb₂O₅, l'oxyde de titane TiO₂, l'oxyde de bismuth Bi₂O₃, l'oxyde de zirconium ZrO₂, l'oxyde de cérium CeO₂.

11. Substrat (1) selon l'une des revendications 7 à 10, **caractérisé en ce que** la différence d'indice de réfraction entre deux couches adjacentes à haut et bas indices de réfraction, notamment entre les deux dernières couches est d'au moins 0,5, notamment d'environ 0,8.

12. Substrat (1) selon l'une des revendications 7 à 11, **caractérisé en ce que** le revêtement (6) anti-reflets comporte l'empilement :
SnO₂ / SiO₂ / Nb₂O₅ (ou SnO₂ ou WO₃ ou Bi₂O₃ ou TiO₂) / couche **A** ou
SnO₂ / couche **A** / Nb₂O₅ (ou SnO₂ ou WO₃ ou Bi₂O₃ ou TiO₂) / couche **A**

13. Substrat (1) selon l'une des revendications 7 à 11, **caractérisé en ce qu'**à la première séquence de couches à haut et bas indices (2, 3) se substitue une couche (7) seule présentant un indice de réfraction intermédiaire compris entre 1,65 et 1,80.

14. Substrat (1) selon l'une des revendications 7 à 11 ou 13, **caractérisé en ce que** la seconde séquence (4, 5) de couches à haut et bas indices de réfraction comprend une couche (4) "globale" à haut indice composée d'une superposition de couches à haut indice, notamment deux ou trois, avec notamment au moins une couche en oxyde de niobium, de bismuth ou de tungstène.

15. Substrat selon l'une des revendications 7 à 14, **caractérisé en ce que** le revêtement (6) anti-reflets est également anti-statique, avec une couche en un matériau conducteur du type oxyde métallique dopé tel que l'oxyde d'indium dopé à l'étain ITO.

16. Substrat (1) selon l'une des revendications 7 à 14, **caractérisé en ce qu'**il comporte un revêtement (6) anti-reflets sur chacune de ses faces.

17. Substrat (1) selon l'une des revendications 7 à 16, **caractérisé en ce qu'**il présente une réflexion lumineuse R_{L} d'au plus 2%, notamment d'au plus 1% voire d'au plus 0,6% et une couleur bleue ou bleu-vert en réflexion, avec notamment des valeurs de a* négatives d'au plus 3,5 en valeurs absolues et des valeurs de b* négatives et d'au plus 1,5 en valeurs absolues.

18. Substrat (1) selon l'une des revendications 1 à 6, **caractérisé en ce que** le revêtement comprend une couche à propriétés thermiques, notamment une couche bas-émissive du type argent ou aluminium, ou oxyde métallique dopé du type SnO₂:F ou oxyde d'indium dopé à l'étain ITO.

19. Vitrage monolithique, feuilleté ou multiple à lame(s) de gaz intercalaire(s), **caractérisé en ce qu'**il incorpore le substrat selon l'une des revendications précédentes.

20. Application du substrat selon l'une des revendications 1 à 18 ou du vitrage selon la revendication 19 à la réalisation de vitrages intérieurs ou extérieurs de bâtiments, vitrages automobile, vitrages de protection d'objet du type tableaux, vitrines ou comptoirs, écrans anti-éblouissement pour ordinateurs, miroirs.

## Patentansprüche (Patentansprüche für folgende(n) Vertragsstaat(en): AT, BE, CH, DE, ES, FR, GB, IT, LI, LU, NL)

1. Transparentes Substrat (1), insbesondere ein Glassubstrat, das auf wenigstens einer Seite eine Beschichtung (6) aus (einer) dünnen Schicht(en) umfasst, **dadurch gekennzeichnet, dass** die Beschichtung mindestens eine Schicht A aus Aluminiumfluorid oder Aluminiumfluoridoxid, AlₓO_{y}F_{z}, umfasst, wobei y ≥ 0, die gegebenenfalls mindestens ein weiteres Oxid enthält, **und dass** der Brechungsindex der Schicht A weniger als 1,63, insbesondere 1,60 bis 1,32, und vorzugsweise zwischen 1,45 und 1,35 beträgt, mit Ausnahme der Beschichtungen aus dünnen Schichten, worin sich die Schicht A in direktem Kontakt mit dem Substrat befindet.

2. Substrat nach Anspruch 1, **dadurch gekennzeichnet, dass** das Atomverhältnis von F/Al der Schicht A 0,10 bis 3, insbesondere zwischen 0,10 und 2,50, und vorzugsweise zwischen 0,16 und 2,45 beträgt.

3. Substrat (1) nach Anspruch 1 oder 2, **dadurch gekennzeichnet, dass** das Atomverhältnis von O/F der Schicht A 0 bis 10, insbesondere zwischen 0,1 und 10, und vorzugsweise zwischen 0,15 und 9 beträgt.

4. Substrat (1) nach Anspruch 1, **dadurch gekennzeichnet, dass** die Schicht A außer Aluminiumfluoridoxid mindestens ein weiteres Oxid oder ein Oxidgemisch enthält, das zu der Gruppe aus Siliciumoxid, SiO₂, Zinnoxid, SnO₂, und Nickeloxid, NiO, gehört.

5. Substrat (1) nach Anspruch 4, **dadurch gekennzeichnet, dass** die Schicht A ein Gemisch aus Aluminiumfluorid oder Aluminiumfluoridoxid und Siliciumoxid mit insbesondere einem Atomverhältnis von Si/Al von 0,05 bis 1,00 und vorzugsweise zwischen 0,06 und 0,10, einem Atomverhältnis von O/F von 0,2 bis 10 und vorzugsweise zwischen 0,25 und 8,70 und einem Atomverhältnis von F/Al von 0,1 bis 2,5 und vorzugsweise zwischen 0,18 und 2,40 enthält.

6. Substrat (1) nach einem der vorhergehenden Ansprüche, **dadurch gekennzeichnet, dass** die Schicht A durch ein Kathodenzerstäubungsverfahren und insbesondere durch reaktive Kathodenzerstäubung in Gegenwart von Sauerstoff und fluorhaltigem Gas, wenn sie ein Aluminiumfluoridoxid enthält, und insbesondere durch reaktive Kathodenzerstäubung in Gegenwart von fluorhaltigem Gas, wenn sie ein Aluminiumfluorid enthält, aufgebracht wird.

7. Substrat (1) nach einem der vorhergehenden Ansprüche, **dadurch gekennzeichnet, dass** die Beschichtung (6) eine Antireflexbeschichtung ist, die abwechselnd Schichten aus dielektrischem Material mit hohem (2, 4) und niedrigem Brechungsindex (3, 5) enthält, wobei mindestens eine Schicht der Schichten (3, 5) mit niedrigem Brechungsindex von einer Schicht A gebildet wird.

8. Substrat (1) nach Anspruch 7, **dadurch gekennzeichnet, dass** die letzte Schicht (5) der Antireflexbeschichtung (6) eine Schicht A ist.

9. Substrat (1) nach Anspruch 7 oder 8, **dadurch gekennzeichnet, dass** die Schichten (3, 5) mit niedrigem Brechungsindex der Antireflexbeschichtung (6) Schichten A sind.

10. Substrat (1) nach einem der Ansprüche 7 bis 9, **dadurch gekennzeichnet, dass** die Schichten (2, 4) mit hohem Brechungsindex einen Brechungsindex von mindestens 1,80 und insbesondere einen Brechungsindex von zwischen 1,90 und 2,20, wie Wolframoxid, WO₃, Zinnoxid, SnO₂, Zinkoxid, ZnO, Aluminiumnitrid, AlN, Siliciumnitrid, Si₃N₄, und Tantaloxid, Ta₂O₅, oder einen Brechungsindex von mindestens 2,25 wie Nioboxid, Nb₂O₅, Titanoxid, TiO₂, Wismutoxid, Bi₂O₃, Zirconiumoxid, ZrO₂, und Ceroxid, CeO₂, besitzen.

11. Substrat (1) nach einem der Ansprüche 7 bis 10, **dadurch gekennzeichnet, dass** die Differenz der Brechenungsindizes zwischen zwei angrenzenden Schichten mit hohem und mit niedrigem Brechungsindex, insbesondere zwischen den beiden letzten Schichten, mindestens 0,5 und insbesondere etwa 0,8 beträgt.

12. Substrat (1) nach einem der Ansprüche 7 bis 11, **dadurch gekennzeichnet, dass** die Antireflexbeschichtung (6) den Aufbau
SnO₂/SiO₂/Nb₂O₅ (oder SnO₂, WO₃, Bi₂O₃ und TiO₂)/ Schicht A
oder
SnO₂/Schicht A/Nb₂O₅ (oder SnO₂, WO₃, Bi₂O₃ und TiO₂)/ Schicht A
umfasst.

13. Substrat (1) nach einem der Ansprüche 7 bis 11, **dadurch gekennzeichnet, dass** die erste Abfolge aus Schichten mit hohem und mit niedrigem Brechungsindex (2, 3) durch eine einzige Schicht (7) ersetzt wird, die einen Zwischen-Brechungsindex von 1,65 bis 1,80 aufweist.

14. Substrat (1) nach einem der Ansprüche 7 bis 11 oder 13, **dadurch gekennzeichnet, dass** die zweite Abfolge (4, 5) aus Schichten mit hohem und mit niedrigem Brechungsindex eine "Gesamtschicht" (4) mit hohem Brechungsindex enthält, die aus einer Übereinanderanordnung von insbesondere zwei oder drei Sichten mit hohem Brechungsindex mit speziell mindestens einer Schicht aus Niob-, Wismut- oder Wolframoxid besteht.

15. Substrat nach einem der Ansprüche 7 bis 14, **dadurch gekennzeichnet, dass** die Antireflexbeschichtung (6) auch antistatisch mit einer Schicht aus einem leitfähigen Material vom Typ dotiertes Metalloxid wie mit Zinn dotiertes Indiumoxid, ITO, ist.

16. Substrat (1) nach einem der Ansprüche 7 bis 14, **dadurch gekennzeichnet, dass** es auf beiden Seiten eine Antireflexbeschichtung (6) umfasst.

17. Substrat (1) nach einem der Ansprüche 7 bis 16, **dadurch gekennzeichnet, dass** es einen Lichtreflexionsgrad R_{L} von höchstens 2 %, insbesondere von höchstens 1 % und sogar von höchstens 0,6 % und bei Reflexion eine blaue oder blaugrüne Farbe mit insbesondere negativen Werten für a* von höchstens 3,5 als Absolutwert und negativen Werten für b* von höchstens 1,5 als Absolutwert aufweist.

18. Substrat (1) nach einem der Ansprüche 1 bis 6, **dadurch gekennzeichnet, dass** die Beschichtung eine Schicht mit thermischen Eigenschaften, insbesondere eine niedrig emittierende Schicht vom Typ Silber oder Aluminium oder dotiertes Metalloxid wie SnO₂:F oder mit Zinn dotiertes Indiumoxid, ITO, enthält.

19. Einscheiben-, Verbund- oder Mehrfachverglasung mit Gasfüllung(en), **dadurch gekennzeichnet, dass** sie das Substrat nach einem der vorhergehenden Ansprüche enthält.

20. Verwendung des Substrats nach einem der Ansprüche 1 bis 18 oder der Verglasung nach Anspruch 19 zur Herstellung von Innen- oder Außenverglasungen für Gebäude, Autoverglasungen, Schutzverglasungen für Gegenstände wie Bilder, Schaufenstern oder Ladentheken, entspiegelten Bildschirmen für Computer und Spiegeln.

## Patentansprüche (Patentansprüche für folgende(n) Vertragsstaat(en): SE)

1. Transparentes Substrat (1), insbesondere ein Glassubstrat, das auf wenigstens einer Seite eine Beschichtung (6) aus (einer) dünnen Schicht(en) umfasst, **dadurch gekennzeichnet, dass** die Beschichtung mindestens eine Schicht A aus Aluminiumfluorid oder Aluminiumfluoridoxid, AlₓO_{y}F_{z}, umfasst, wobei y ≥ 0, die gegebenenfalls mindestens ein weiteres Oxid enthält, **und dass** der Brechungsindex der Schicht A weniger als 1,63, insbesondere 1,60 bis 1,32, und vorzugsweise zwischen 1,45 und 1,35 beträgt.

2. Substrat nach Anspruch 1, **dadurch gekennzeichnet, dass** das Atomverhältnis von F/Al der Schicht A 0,10 bis 3, insbesondere zwischen 0,10 und 2,50, und vorzugsweise zwischen 0,16 und 2,45 beträgt.

3. Substrat (1) nach Anspruch 1 oder 2, **dadurch gekennzeichnet, dass** das Atomverhältnis von O/F der Schicht A 0 bis 10, insbesondere zwischen 0,1 und 10, und vorzugsweise zwischen 0,15 und 9 beträgt.

4. Substrat (1) nach Anspruch 1, **dadurch gekennzeichnet, dass** die Schicht A außer Aluminiumfluoridoxid mindestens ein weiteres Oxid oder ein Oxidgemisch enthält, das zu der Gruppe aus Siliciumoxid, SiO₂, Zinnoxid, SnO₂, und Nickeloxid, NiO, gehört.

5. Substrat (1) nach Anspruch 4, **dadurch gekennzeichnet, dass** die Schicht A ein Gemisch aus Aluminiumfluorid oder Aluminiumfluoridoxid und Siliciumoxid mit insbesondere einem Atomverhältnis von Si/Al von 0,05 bis 1,00 und vorzugsweise zwischen 0,06 und 0,10, einem Atomverhältnis von O/F von 0,2 bis 10 und vorzugsweise zwischen 0,25 und 8,70 und einem Atomverhältnis von F/Al von 0,1 bis 2,5 und vorzugsweise zwischen 0,18 und 2,40 enthält.

6. Substrat (1) nach einem der vorhergehenden Ansprüche, **dadurch gekennzeichnet, dass** die Schicht A durch ein Kathodenzerstäubungsverfahren und insbesondere durch reaktive Kathodenzerstäubung in Gegenwart von Sauerstoff und fluorhaltigem Gas, wenn sie ein Aluminiumfluoridoxid enthält, und insbesondere durch reaktive Kathodenzerstäubung in Gegenwart von fluorhaltigem Gas, wenn sie ein Aluminiumfluorid enthält, aufgebracht wird.

7. Substrat (1) nach einem der vorhergehenden Ansprüche, **dadurch gekennzeichnet, dass** die Beschichtung (6) eine Antireflexbeschichtung ist, die abwechselnd Schichten aus dielektrischem Material mit hohem (2, 4) und niedrigem Brechungsindex (3, 5) enthält, wobei mindestens eine Schicht der Schichten (3, 5) mit niedrigem Brechungsindex von einer Schicht A gebildet wird.

8. Substrat (1) nach Anspruch 7, **dadurch gekennzeichnet, dass** die letzte Schicht (5) der Antireflexbeschichtung (6) eine Schicht A ist.

9. Substrat (1) nach Anspruch 7 oder 8, **dadurch gekennzeichnet, dass** die Schichten (3, 5) mit niedrigem Brechungsindex der Antireflexbeschichtung (6) Schichten A sind.

10. Substrat (1) nach einem der Ansprüche 7 bis 9, **dadurch gekennzeichnet, dass** die Schichten (2, 4) mit hohem Brechungsindex einen Brechungsindex von mindestens 1,80 und insbesondere einen Brechungsindex von zwischen 1,90 und 2,20, wie Wolframoxid, WO₃, Zinnoxid, SnO₂, Zinkoxid, ZnO, Aluminiumnitrid, AlN, Siliciumnitrid, Si₃N₄, und Tantaloxid, Ta₂O₅, oder einen Brechungsindex von mindestens 2,25 wie Nioboxid, Nb₂O₅, Titanoxid, TiO₂, Wismutoxid, Bi₂O₃, Zirconiumoxid, ZrO₂, und Ceroxid, CeO₂, besitzen.

11. Substrat (1) nach einem der Ansprüche 7 bis 10, **dadurch gekennzeichnet, dass** die Differenz der Brechenungsindizes zwischen zwei angrenzenden Schichten mit hohem und mit niedrigem Brechungsindex, insbesondere zwischen den beiden letzten Schichten, mindestens 0,5 und insbesondere etwa 0,8 beträgt.

12. Substrat (1) nach einem der Ansprüche 7 bis 11, **dadurch gekennzeichnet, dass** die Antireflexbeschichtung (6) den Aufbau
SnO₂/SiO₂/Nb₂O₅ (oder SnO₂, WO₃, Bi₂O₃ und TiO₂)/ Schicht A
oder
SnO₂/Schicht A/Nb₂O₅ (oder SnO₂, WO₃, Bi₂O₃ und TiO₂)/ Schicht A
umfasst.

13. Substrat (1) nach einem der Ansprüche 7 bis 11, **dadurch gekennzeichnet, dass** die erste Abfolge aus Schichten mit hohem **und** mit niedrigem Brechungsindex (2, 3) durch eine einzige Schicht (7) ersetzt wird, die einen Zwischen-Brechungsindex von 1,65 bis 1,80 aufweist.

14. Substrat (1) nach einem der Ansprüche 7 bis 11 oder 13, **dadurch gekennzeichnet, dass** die zweite Abfolge (4, 5) aus Schichten mit hohem und mit niedrigem Brechungsindex eine "Gesamtschicht" (4) mit hohem Brechungsindex enthält, die aus einer Übereinanderanordnung von insbesondere zwei oder drei Sichten mit hohem Brechungsindex mit speziell mindestens einer Schicht aus Niob-, Wismut- oder Wolframoxid besteht.

15. Substrat nach einem der Ansprüche 7 bis 14, **dadurch gekennzeichnet, dass** die Antireflexbeschichtung (6) auch antistatisch mit einer Schicht aus einem leitfähigen Material vom Typ dotiertes Metalloxid wie mit Zinn dotiertes Indiumoxid, ITO, ist.

16. Substrat (1) nach einem der Ansprüche 7 bis 14, **dadurch gekennzeichnet, dass** es auf beiden Seiten eine Antireflexbeschichtung (6) umfasst.

17. Substrat (1) nach einem der Ansprüche 7 bis 16, **dadurch gekennzeichnet, dass** es einen Lichtreflexionsgrad R_{L} von höchstens 2 %, insbesondere von höchstens 1 % und sogar von höchstens 0,6 % und bei Reflexion eine blaue oder blaugrüne Farbe mit insbesondere negativen Werten für a* von höchstens 3,5 als Absolutwert und negativen Werten für b* von höchstens 1,5 als Absolutwert aufweist.

18. Substrat (1) nach einem der Ansprüche 1 bis 6, **dadurch gekennzeichnet, dass** die Beschichtung eine Schicht mit thermischen Eigenschaften, insbesondere eine niedrig emittierende Schicht vom Typ Silber oder Aluminium oder dotiertes Metalloxid wie SnO₂:F oder mit Zinn dotiertes Indiumoxid, ITO, enthält.

19. Einscheiben-, Verbund- oder Mehrfachverglasung mit Gasfüllung(en), **dadurch gekennzeichnet, dass** sie das Substrat nach einem der vorhergehenden Ansprüche enthält.

20. Verwendung des Substrats nach einem der Ansprüche 1 bis 18 oder der Verglasung nach Anspruch 19 zur Herstellung von Innen- oder Außenverglasungen für Gebäude, Autoverglasungen, Schutzverglasungen für Gegenstände wie Bilder, Schaufenstern oder Ladentheken, entspiegelten Bildschirmen für Computer und Spiegeln.

## Claims (Claims for the following Contracting State(s): AT, BE, CH, DE, ES, FR, GB, IT, LI, LU, NL)

1. Transparent substrate (1), particularly a glass substrate, having on at least one of its faces a layer (6) formed by a thin film or thin films, characterized in that said layer comprises at least one aluminium fluoride or oxyfluoride AlₓO_{y}F_{z} film with y ≥ 0, optionally incorporating at least one other oxide and in that the film A has a refractive index below 1.63, particularly between 1.60 and 1.32 and preferably between 1.45 and 1.35, with the exception of layers of thin films where the film A is in direct contact with the substrate.

2. Substrate according to claim 1, characterized in that the F/Al atomic ratio of film A is between 0.10 and 3, particularly between 0.10 and 2.50 and preferably between 0.16 and 2.45.

3. Substrate (1) according to either of the claims 1 and 2, characterized in that the 0/F atomic ratio of film A is between 0 and 10, particularly between 0.1 and 10 and preferably between 0.15 and 9.

4. Substrate (1) according to claim 1, characterized in that film A comprises, apart from aluminium oxyfluoride, at least one other oxide or a mixture of oxides belonging to the following group: silicon dioxide SiO₂, tin dioxide SnO₂ and nickel oxide NiO.

5. Substrate (1) according to claim 4, characterized in that film A comprises a mixture of aluminium fluoride or oxyfluoride and silicon dioxide, with in particular a Si/Al atomic ratio between 0.05 and 1.00, preferably between 0.06 and 0.10, an 0/F atomic ratio between 0.2 and 10 and preferably between 0.25 and 8.70 and a F/Al atomic ratio between 0.1 and 2.5, preferably between 0.18 and 2.40.

6. Substrate (1) according to one of the preceding claims, characterized in that the film A is deposited by a cathodic sputtering method, particularly reactive cathodic sputtering in the presence of oxygen and fluorine gas when it comprises an aluminium oxyfluoride and in particular reactive cathodic sputtering in the presence of fluorine gas when it comprises an aluminium fluoride.

7. Substrate (1) according to one of the preceding claims, characterized in that the layer (6) is an antireflection layer, comprising an alternation of films of dielectric material with high (2, 4) and low (3, 5) refractive indices, at least one of the low refractive index films (3, 5) being constituted by a film A.

8. Substrate (1) according to claim 7, characterized in that the last film (5) of the antireflection layer (6) is a film A.

9. Substrate (1) according to claim 7 or 8, characterized in that all the low refractive index films (3, 5) of the antireflection layer (6) are films A.

10. Substrate (1) according to one of the claims 7 to 9, characterized in that the high refractive index films (2, 4) have an index of at least 1.80, particularly an index between 1.90 and 2.20, such as tungsten trioxide WO₃, tin dioxide SnO₂, zinc oxide ZnO, aluminium nitride AlN, silicon nitride Si₃N₄, tantalum pentaoxide Ta₂O₅, or an index of at least 2.25 such as niobium pentaoxide Nb₂O₅, titanium dioxide TiO₂, bismuth trioxide Bi₂O₃, zirconium dioxide ZrO₂ and cerium dioxide CeO₂.

11. Substrate (1) according to one of the claims 7 to 10, characterized in that the refractive index difference between two adjacent high and low refractive index films, particularly between the last two films is at least 0.5, particularly approximately 0.8.

12. Substrate (1) according to one of the claims 7 to 11, characterized in that the antireflection layer (6) comprises the stack:
SnO₂/SiO₂/Nb₂O₅ (or SnO₂ or WO₃ or Bi₂O₃ or TiO₂)/film A or
SnO₂/film A/Nb₂O₅ (or SnO₂ or WO₃ or Bi₂O₃ or TiO₂)/film A.

13. Substrate (1) according to one of the claims 7 to 11, characterized in that the first sequence of high and low refractive index films (2, 3) is substituted by a film (7) alone having an intermediate refractive index between 1.65 and 1.80.

14. Substrate (1) according to one of the claims 7 to 11 or 13, characterized in that the second sequence (4, 5) of high and low refractive index films comprises a "global" film (4) having a high index and constituted by a superimposing of high index films, particularly two or three films, with in particular at least one niobium, bismuth or tungsten oxide film.

15. Substrate according to one of the claims 7 to 14, characterized in that the antireflection layer (6) is also of an antistatic nature with a film of a conductive material of the doped metal oxide type such as tin-doped indium oxide ITO.

16. Substrate (1) according to one of the claims 7 to 14, characterized in that it has an antireflection layer (6) on each of its faces.

17. Substrate (1) according to one of the claims 7 to 16, characterized in that it has a light reflection R_{L} of at the most 2%, particularly at the most 1%, or at the most 0.6% and a blue or blue-green colour in reflection, with in particular negative values of a* of at the most 3.5 in absolute values and negative values of b* of at the most 1.5 in absolute values.

18. Substrate (1) according to one of the claims 1 to 16, characterized in that the layer comprises a film having thermal properties, particularly a low-emissive film of the silver or aluminium type, or doped metal oxide of the SnO₂:F type or tin-doped indium oxide ITO.

19. Multiple or laminated, monolithic glazing having an intercalated gas tongue or tongues, characterized in that it incorporates the substrate according to one of the preceding claims.

20. Application of the substrate according to one of the claims 1 to 18 or the glazing according to claim 19 to the production of internal or external glazings for buildings, car glazings, object protection glazings of the display, display case or counter type, antiglare screens for computers and mirrors.

## Claims (Claims for the following Contracting State(s): SE)

1. Transparent substrate (1), particularly a glass substrate, having on at least one of its faces a layer (6) formed by a thin film or thin films, characterized in that said layer comprises at least one aluminium fluoride or oxyfluoride AlₓO_{y}F_{z} film with y ≥ 0, optionally incorporating at least one other oxide and in that the film A has a refractive index below 1.63, particularly between 1.60 and 1.32 and preferably between 1.45 and 1.35.

2. Substrate according to claim 1, characterized in that the F/Al atomic ratio of film A is between 0.10 and 3, particularly between 0.10 and 2.50 and preferably between 0.16 and 2.45.

3. Substrate (1) according to either of the claims 1 and 2, characterized in that the O/F atomic ratio of film A is between 0 and 10, particularly between 0.1 and 10 and preferably between 0.15 and 9.

4. Substrate (1) according to claim 1, characterised in that film A comprises, apart from aluminium oxyfluoride, at least one other oxide or a mixture of oxides belonging to the following group: silicon dioxide SiO₂, tin dioxide SnO₂ and nickel oxide NiO.

5. Substrate (1) according to claim 4, characterized in that film A comprises a mixture of aluminium fluoride or oxyfluoride and silicon dioxide, with in particular a Si/Al atomic ratio between 0.05 and 1.00, preferably between 0.06 and 0.10, an O/F atomic ratio between 0.2 and 10 and preferably between 0.25 and 8.0 and a F/Al atomic ratio between 0.1 and 2.5, preferably between 0.18 and 2.40.

6. Substrate (1) according to one of the preceding claims, characterized in that the film A is deposited by a cathodic sputtering method, particularly reactive cathodic sputtering in the presence of oxygen and fluorine gas when it comprises an aluminium oxyfluoride and in particular reactive cathodic sputtering in the presence of fluorine gas when it comprises an aluminium fluoride.

7. Substrate (1) according to one of the preceding claims, characterized in that the layer (6) is an antireflection layer, comprising an alternation of films of dielectric material with high (2, 4) and low (3, 5) refractive indices, at least one of the low refractive index films (3, 5) being constituted by a film A.

8. Substrate (1) according to claim 7, characterized in that the last film (5) of the antireflection layer (6) is a film A.

9. Substrate (1) according to claim 7 or 8, characterized in that all the low refractive index films (3, 5) of the antireflection layer (6) are films A.

10. Substrate (1) according to one of the claims 7 to 9, characterized in that the high refractive index films (2, 4) have an index of at least 1.80, particularly an index between 1.90 and 2.20, such as tungsten trioxide WO₃, tin dioxide SnO₂, zinc oxide ZnO, aluminium nitride AlN, silicon nitride Si₃N₄, tantalum pentaoxide Ta₂O₅, or an index of at least 2.25 such as niobium pentaoxide Nb₂O₅, titanium dioxide TiO₂, bismuch trioxide Bi₂O₃, zirconium dioxide ZrO₂ and cerium dioxide CeO₂.

11. Substrate (1) according to one of the claims 7 to 10, characterized in that the refractive index difference between two adjacent high and low refractive index films, particularly between the last two films is at least 0.5, particularly approximately 0.8.

12. Substrate (1) according to one of the claims 7 to 11, characterized in that the antireflection layer (6) comprises the stack:
SnO₂/SiO₂/Nb₂O₅ (or SnO₂ or WO₃ or Bi₂O₃ or TiO₂)/film A or
SnO₂/film A/Nb₂O₅ (or SnO₂ or WO₃ or Bi₂O₃ or TiO₂)/film A.

13. Substrate (1) according to one of the claims 7 to 11, characterized in that the first sequence of high and low refractive index films (2, 3) is substituted by a film (7) alone having an intermediate refractive index between 1.65 and 1.80.

14. Substrate (1) according to one of the claims 7 to 11 or 13, characterized in that the second sequence (4, 5) of high and low refractive index films comprises a "global" film (4) having a high index and constituted by a superimposing of high index films, particularly two or three films, with in particular at least one niobium, bismuth or tungsten oxide film.

15. Substrate according to one of the claims 7 to 14, characterized in that the antireflection layer (6) is also of an antistatic nature with a film of a conductive material of the doped metal oxide type such as tin-doped indium oxide ITO.

16. Substrate (1) according to one of the claims 7 to 14, characterized in that it has an antireflection layer (6) on each of its faces.

17. Substrate (1) according to one of the claims 7 to 16, characterized in that it has a light reflection R_{L} of at the most 2%, particularly at the most 1%, or at the most 0.6% and a blue or blue-green colour in reflection, with in particular negative values of a* of at the most 3.5 in absolute values and negative values of b* of at the most 1.5 in absolute values.

18. Substrate (1) according to one of the claims 1 to 16, characterized in that the layer comprises a film having thermal properties, particularly a low-emissive film of the silver or aluminium type, or doped metal oxide of the SnO₂:F type or tin-doped indium oxide ITO.

19. Multiple or laminated, monolithic glazing having an intercalated gas tongue or tongues, characterized in that it incorporates the substrate according to one of the preceding claims.

20. Application of the substrate according to one of the claims 1 to 18 or the glazing according to claim 19 to the production of internal or external glazings for buildings, car glazings, object protection glazings of the display, display case or counter type, antiglare screens for computers and mirrors.
